Europäisches Patentamt

European Patent Office

Office européen des brevets

(11) Veröffentlichungsnummer: **0 029 074**
A1

## (12) EUROPÄISCHE PATENTANMELDUNG

(21) Anmeldenummer: 79105124.6

(22) Anmeldetag: **13.12.79**

(51) Int. Cl.³: **B 60 C 15/02,** B 60 B 21/10, B 60 C 23/12

(30) Priorität: **19.11.79 DE 2946636**

(43) Veröffentlichungstag der Anmeldung: **27.05.81** Patentblatt **81/21**

(84) Benannte Vertragsstaaten: **DE FR GB IT**

(71) Anmelder: **Klaue, Hermann, Dr., 33, av. du Casino Postfach 151, CH-1820 Montreux (CH)**

(72) Erfinder: **Klaue, Hermann, Dr., 33, av. du Casino Postfach 151, CH-1820 Montreux (CH)**

(54) **Luftbereiftes Kraftfahrzeugrad.**

(57) Luftbereiftes Kraftfahrzeugrad, bei dem die Felge (5) mit dem aufgegossenen oder aufgeklebten Reifen (7) aus vorzugsweise faserverstärktem Kunstkautschuk eine Einheit bilden.

ACTORUM AG

Konventionelle, luftbereifte Kraftfahrzeugräder bestehen aus
dem Scheibenrad mit Tiefbettfelge, auf welche der getrennte
Reifen mittels seiner Wülste, die sich an den Hörnern der
Felge abstützen, gesetzt ist. Der ringsherum gummierte Reifen
besitzt einen Unterbau, welcher sein tragendes Gerüst darstellt. Heute ist dieser vorwiegend aus Kunstseide hergestellt.
An seinem Aussenumfang ist der Unterbau meistens noch durch
den Gürtel, auf den die Lauffläche aufgesetzt ist, verstärkt.

Besonders kräftig sind die Wülste, die einen Drahtkern besitzen,
ausgebildet. Die Herstellung heutiger Reifen ist wegen dieses
komplizierten Aufbaues verhältnismässig teuer, zumal die Fertigung nicht weitgehend genug automatisiert werden kann. Im
Fahrbetrieb neigen konventionell gestaltete Reifen zu relativ
starker Eigenerhitzung, weil zur Erzielung der Kurvensteifigkeit der Unterbau der Seitenwand kräftig ausgebildet werden
muss, was dazu führt, dass die Walkarbeit ausschliesslich von
der Reifenseitenwand am Aussenumfang mit entsprechend grossem
Wärmeanfall in diesem Bereich geleistet wird.

Deshalb sind Bestrebungen im Gange, einen anderen Reifenaufbau
zu entwickeln, wofür sich faserverstärkte Kunstkautschuke, beispielsweise Silikon, infolge ihrer Giessbarkeit besonders eignen. Jedoch müssen auch diese Reifen bei den heute üblichen
Gestaltungen der Felgen mit verstärkten Wülsten ausgebildet
werden. Dadurch fallen auch diese Reifen noch schwer und teuer
aus.

Felgen und Scheibenräder machen im Augenblick entweder eine
Entwicklung in Richtung Leichtmetall mit guter oder auf faserverstärkte Kunststoffe, beispielsweise Polyamid, mit schlechter
Wärmespeicherung und -leitung durch. Letztere eignen sich jedoch festigkeitsmässig gut für diese Anwendung und besitzen den

..../

Vorteil, dass ihr spezifisches Gewicht rund die Hälfte desjenigen von Leichtmetall beträgt.

Die Erfindung berücksichtigt die genannten Entwicklungen und hat sich zur Aufgabe gesetzt, ein Kraftfahrzeugrad zu gestalten, bei dem die vom konventionellen Reifenbau übernommenen Nachteile der derzeitigen Silikonreifenentwicklung möglichst ganz beseitigt und mit dem erhebliche Gewichtsvorteile zur Reduktion der unabgefederten Massen erzielt werden.

Beim Kraftfahrzeugrad der Erfindung bildet die Felge mit dem aufgegossenen oder aufgeklebten Reifen aus Kunstkautschuk eine nicht lösbare Einheit. In weiterer Ausbildung der Erfindung ist die Felge aus Kunststoff, beispielsweise Polyurethan, Polyamid, Polyester mit 20 bis 50 % Glasfaser. In noch weiterer Ausbildung wird an den Anguss- oder Aufklebestellen des Reifens eine zusätzliche formschlüssige Verbindung zwischen Felgenhorn und Reifen dadurch hergestellt, dass vorgeformte Fortsätze das Felgenhorn durchdringen. In noch weiterer Ausbildung der Erfindung weist der auf die Felgenhörner aufgeklebte Reifen eine am Umfang verteilt, quer oder schräg zur Umfangsrichtung angeordnete Rippenverstärkung auf, welche an den Stellen der Reifenseitenwände derart ausgenommen ist, dass eine freie Ausbuchtung der Seitenwände möglich bleibt.

Diese Ausführung der Erfindung weist den Vorteil auf, dass ein leichter, aus dünnen Kunstkautschukwänden gebildeter Reifen geschaffen wird, dessen federnde Eigenschaften ausschliesslich durch Ausbiegen (Walken) der Reifenseitenwände gegeben ist und dass die in Umfangs- und Seitenrichtung erforderliche Steifigkeit dadurch erreicht wird, dass die vorwiegend in Wandebene

.../.

wirksamen Fasern den Seitenwänden, der Lauffläche und den quer
im Reifen angeordneten Rippen in ihrer Längsrichtung die hierfür erforderliche Festigkeit geben. Die Querverstärkung kann
auch gemäss einer Weiterentwicklung der Erfindung durch Metall-
oder Kunststoffstreben hergestellt werden.

In noch weiterer Ausbildung der Erfindung werden die vom Reifen durch Giessen oder Kleben umfassten Felgenhörner so lang
ausgeführt, dass von ihnen ein Drittel bis die Hälfte der Querschnittshöhe von Felge und Reifen zusammen gebildet wird.

Nach diesen Merkmalen hergestellte Kraftfahrzeugräder fallen
erheblich leichter aus als normale Scheibenräder mit getrennten
Reifen, auch aus gegossenem Silikon. Sie besitzen ihnen gegenüber den erheblichen Vorteil, dass die Felge kraftschlüssig
mit dem Reifen verbunden ist, während bei der konventionellen
Bauweise der Kraftschluss durch Reibung übernommen wird. Ausserdem ergibt sich durch die Bauform der Erfindung der Vorteil der
besseren Seitensteifigkeit des Reifens, weil die elastische, bei
der Kurvenfahrt seitlich ausfedernde Seitenwand des Reifens erheblich kürzer ist. Ausserdem wird durch diese Reifenausbildung
ein sehr grosser Verformungswinkel, d.h. eine flache Abplattung
des Reifens, verwirklicht mit dem Vorteil eines niedrigeren Rollwiderstandes. Bezüglich der auftretenden Walkarbeit treten wegen
der kürzeren Seitenwände keine Nachteile auf. Wie bereits erwähnt, wird diese bei den konventionellen Reifen infolge des
kräftigen Aufbaues der Karkasse auch nur in diesem Bereich
durchgeführt. Hier muss auch berücksichtigt werden, dass die
Polyamidfelge ebenfalls eine gewisse elastische Formänderung mit
durchführt.

Um die Seitensteifigkeit des Reifens noch weiter zu verbessern
und die Reifenseitenwände noch dünnwandiger ausführen zu können,
werden in Weiterbildung der Erfindung sowohl die Felge, als
auch der Reifen im Reifenluftraum mit radial ineinandergreifen-

.../

den Rippen- oder Profilfortsätzen versehen. Sie können rohrförmig ausgebildet werden, wobei in einer Weiterbildung der
Erfindung in den Druckräumen der Fortsätze Anschläge vorgesehen
werden können, welche bei drucklosem Reifen seine Ausgangslaufform weitgehend unverändert lassen. Bei dieser weiterentwickelten Lösung können die Seitenwände ohne Rücksicht auf
eine Ausbildung zur Aufnahme der Seitenführung, d.h. nur für
eine leichte Durchfederung, ausgebildet werden, so dass durch
das Walken praktisch keine Temperaturerhöhung mehr auftreten
kann. Es können dann harte Kautschuksorten Anwendung finden,
die eine grössere Laufdauer des Reifens gewährleisten. Die
Kennung eines Luftreifens kann durch die Mittenabstützung im
Luftraum in einer Weise verbessert werden, wie es mit einem
konventionellen Reifen unmöglich ist.

Bei dem Reifen der Erfindung mit Mittenabstützung bleibt die
Seitenführung elastisch, weil die Reifenfortsätze, welche
allerdings über Rippen mit der Laufbahn verbunden sein müssen,
aus elastischem Werkstoff bestehen. Bei dieser Lösung kann,
wie es in Weiterbildung der Erfindung vorgeschlagen wird, der
Druckraum zwischen den beiden Zylinderfortsätzen dergestalt
zum Erzeugen und Regulieren des Reifendruckes benutzt werden,
dass in den Felgenfortsätzen Saugventile mit einer Verbindung
nach aussen, Druckventile mit einer Verbindung zum Reifeninnenraum und in der Felgenwand ein Druckregelventil mit einem
Auslass nach aussen vorgesehen werden. Durch diese Massnahme
wird ein Reifen wartungsfrei und dazu voll gebrauchstüchtig
bei einer - allerdings begrenzten - Beschädigung. Ausserdem
wird durch diese Massnahme erreicht, dass bei krassem Temperaturwechsel die Ausgangskennung des Reifens erhalten bleibt,
weil der Reifeninnendruck konstant gehalten wird. Bei einer Beschädigung des Reifens behält dieser seinen Innendruck, so lange die Druckluftförderung des Reifens dafür ausreicht. Nur würde in diesem Fall die Luft bei einem Stehenlassen des Kraftfahrzeugs entweichen und der Reifen auf den Mittenfortsätzen aufstehen. Wird jedoch der Wagen wieder gefahren, so wird, falls die Verletzung nicht zu gross ist, der durch den Druckregler bestimmte Reifeninnendruck schnell wieder aufgebaut.

Durch diese Massnahme ist auch gewährleistet, dass der Reifen infolge des selbstätig regulierten Druckes gleichmässig abgenutzt wird. Statistisch ist nachgewiesen, dass heute nahezu die Hälfte aller Automobilbenutzer den vorgeschriebenen Reifenluftdruck nicht einhalten, wodurch eine ungleichmässige Abnutzung des Reifens entweder in der Mitte des Profils bei zu hohem Druck oder an den Kanten bei zu niedrigem Luftdruck auftritt. Diese Fehler sind bei Verwendung eines Reifens der Erfindung ausgeschlossen.

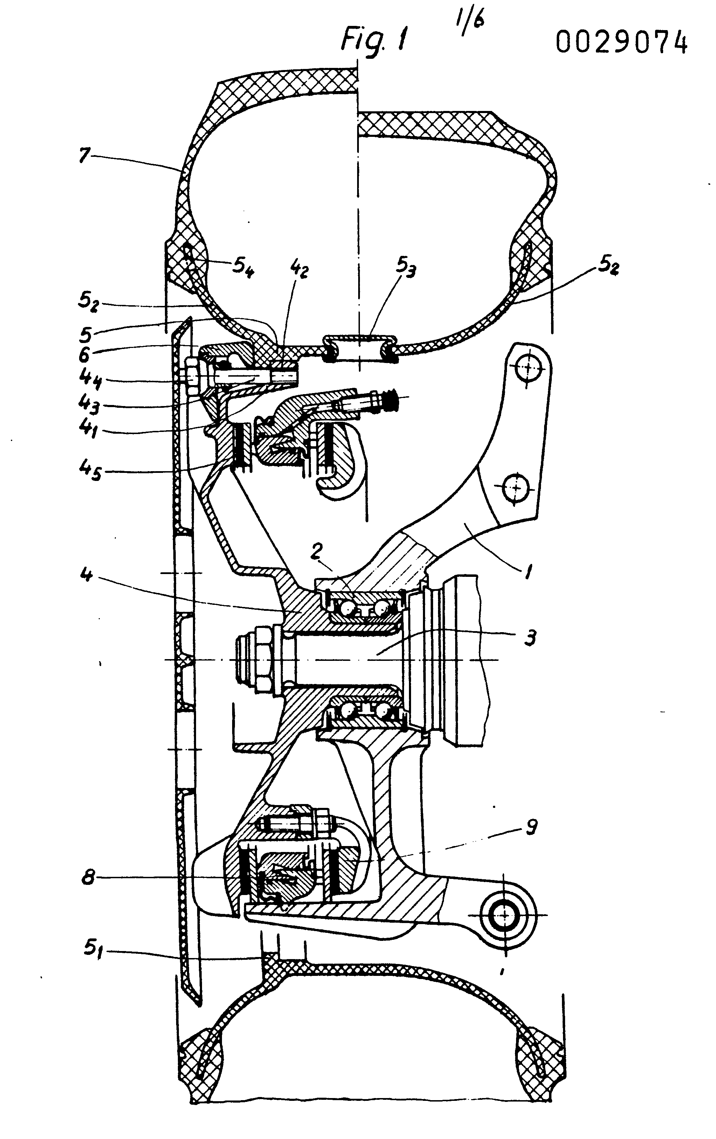

In den Abbildungen sind Ausführungsbeispiele der Erfindung dargestellt. In Fig. 1 ist ein Kraftfahrzeugrad dargestellt, bei dem die Felge mit dem Reifen zu einer Einheit verbunden ist und die Felge mit Reifen vom Radkörper abgenommen werden kann. Als Beispiel ist das Vorderrad eines vorderradangetriebenen Personenkraftwagens gewählt. In der linken Hälfte der Zeichnung ist der Reifen unbelastet und rechts belastet dargestellt.

Am Schwenklager 1 ist über das Lager 2 der Radkörper 4, der über die Antriebswelle 3 angetrieben wird, gelagert. Der Radkörper 4 trägt auf Armen $4_1$ mit Augen $4_2$, befestigt durch Radbolzen $4_3$ mit Radmuttern $4_4$ die aus faserverstärktem Polyamid hergestellte Felge 5 an einer Befestigungsrippe $5_1$. Die Felgenhörner $5_2$ sind vom Reifen 7 umgossen. Um den Giesskern entfernen zu können, weist die Felge 5 um Umfang verteilt Oeffnun-

.../

gen auf, die durch eingewalzte Kappen $5_3$ geschlossen sind. Im vorliegenden Beispiel weist der Radkörper 4 eine Anlauffläche $4_5$ auf, die als Reibfläche für die eingebaute Vollbelagscheibenbremse 8 dient. Die Gegenreibfläche wird durch den Bremsdeckel 9 gebildet.

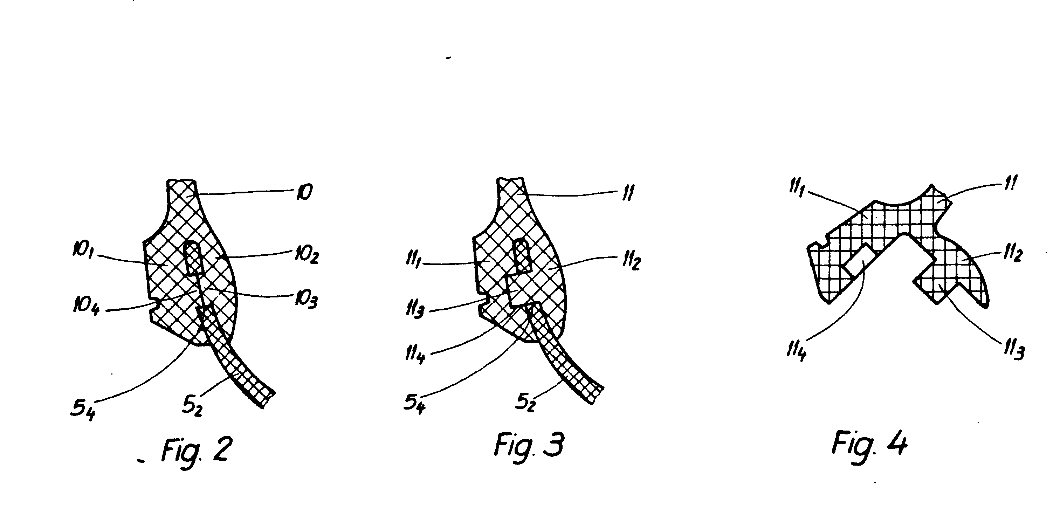

In den Abbildungen Fig. 2 bis 4 ist die Reifenverankerung mit dem Felgenhorn vergrössert für den Fall wiedergegeben, dass die Verbindung durch Kleben erfolgt. Die Felgenhörner $5_2$ wei-sen hierbei wieder Aussparungen $5_4$ auf, in die Fortsätze $10_3$ des Reifenlappens $10_2$ und Fortsätze $10_4$ des Reifenlappens $10_1$ beim Klebevorgang eingreifen. Im Beispiel Fig. 3 weist der Reifen 11 an dem Reifenlappen $11_1$ eine Ausnehmung $11_4$ auf, in die beim Aufkleben der durch die Aussparung $5_4$ des Felgenhorns $5_2$ hindurchfassende Fortsatz $11_3$ des Reifenlappens $11_2$ ein-greift. In Fig. 4 ist der Reifenfuss der Lösung nach Fig. 3 vor dem Aufkleben mit geöffneten Reifenlappen und gleichen Bezugszeichen wie in Fig. 3 wiedergegeben.

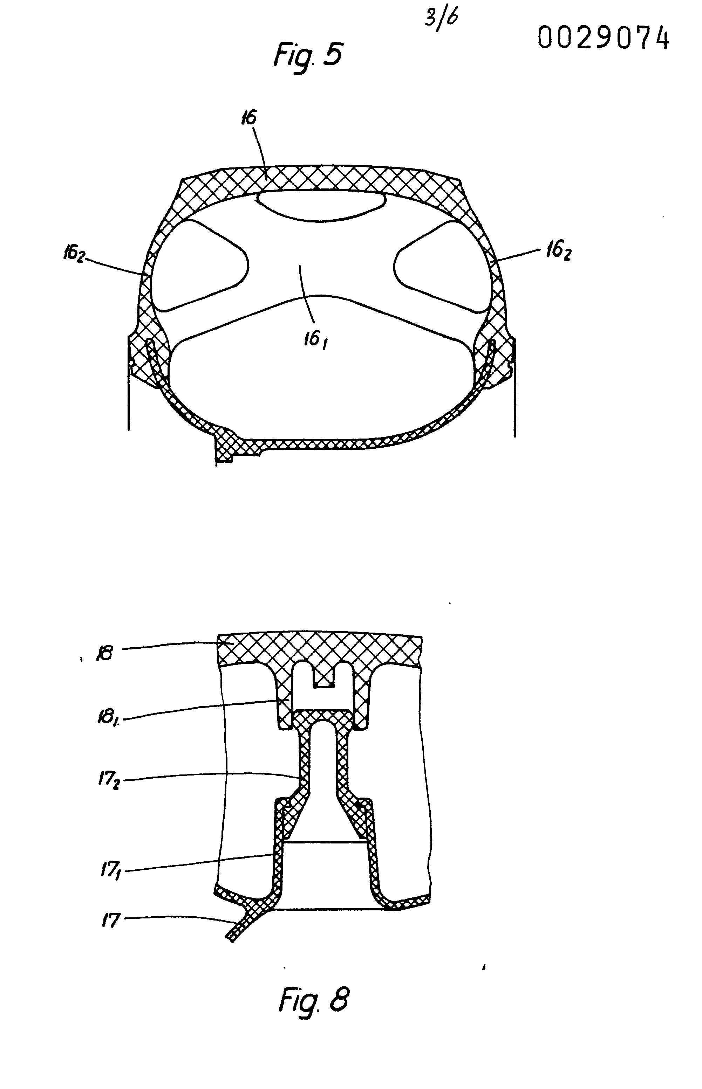

In Fig. 5 ist der Querschnitt durch eine Felge mit Reifen für das Rad nach Fig. 1 veranschaulicht, dessen aufgeklebter, vorgeformter Reifen 16 eine innere Querversteifung durch eine kreuzförmige Verrippung $16_1$ aufweist. Diese Verrippung, welche an den Stellen der sich beim Umfang durchbiegenden Seiten-wände $16_2$ und unterhalb der Reifenlauffläche ausgenommen ist, versteift den Reifen bei Seitenbelastung, ohne dass seine Einfederung wesentlich beeinflusst wird. Sie wird zweckmässigerweise in Umfangsrichtung diagonal angeordnet eingegossen, um gleichzeitig noch eine Versteifung in Umfangsrichtung zu erzielen.

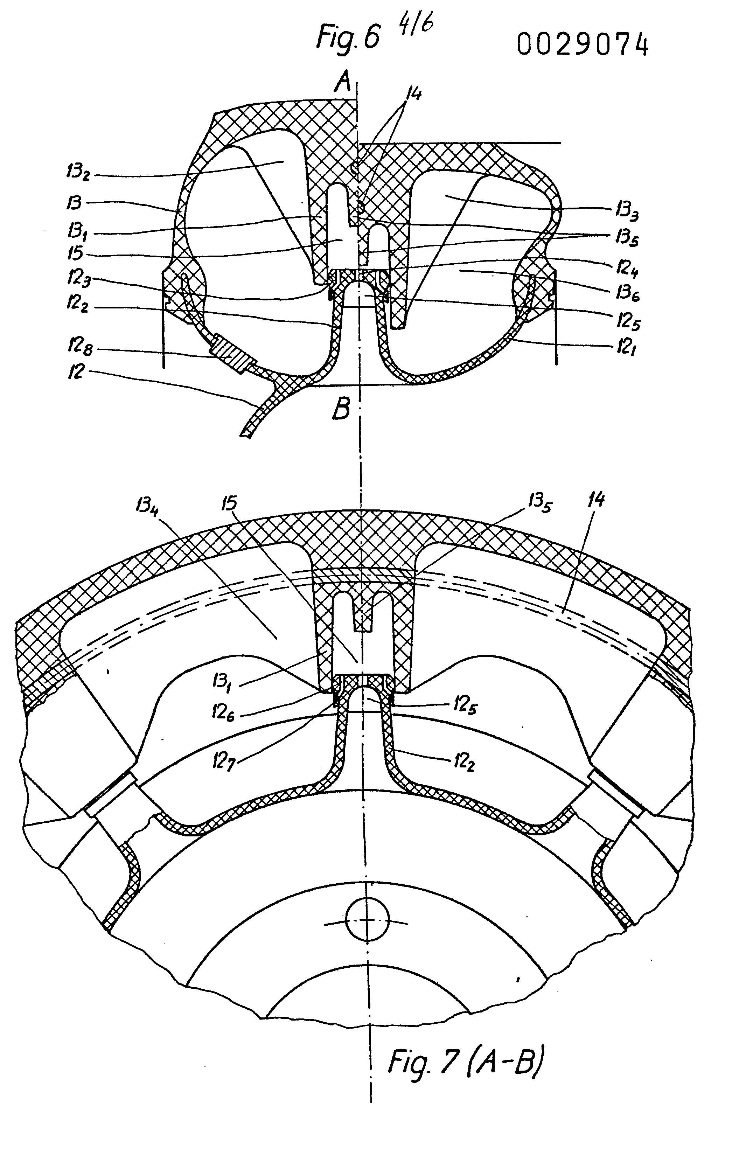

In Fig. 6 und 7 ist im Quer- und Längsschnitt ein Kraftfahrrad dargestellt, bei dem eine Mittenabstützung zwischen Reifen und Felge durch beiderseitige Fortsätze vorgesehen ist. In

.../

diesem Fall ist das beispielsweise aus faserverstärktem Polyamid oder Polyurethan hergestellte Scheibenrad 12 mit Felge
$12_1$ mit dem Reifen 13 durch Kleben verbunden. In Fig. 6 ist
wieder auf der rechten Seite der aufstehende und auf der linken Seite der nicht belastete Reifen im Schnitt wiedergegeben.
Schliesslich ist in Fig. 7 ein Teilschnitt durch Felge und
Reifen mit verlängerten rohrförmigen Felgenfortsätzen dargestellt.

In Fig. 7 ist ein in Fig. 6 mit A-B gekennzeichneter Teillängsschnitt durch Scheibenrad und Reifen veranschaulicht. Am Umfang gleichmässig verteilt sind an die Felge $12_1$ nach aussen
ragende hohle Fortsätze $12_2$ mit angegossen. Die Fortsätze weisen an ihren in die rohrförmigen Fortsätze $13_1$ des Reifens eingreifenden Enden kugelförmige Aussenoberflächen $12_3$ auf. Die
beiden Fortsätze $13_1$ sind seitlich durch die Rippen $13_2$ und
$13_3$ und in Umfangsrichtung durch die umlaufende Rippe $13_4$ abgestützt. Im vorstehenden Beispiel besitzt der Reifen eine
eingegossene Litzendrahtverstärkung 14.

Im Druckraum 15, der von den Felgen- und Reifenfortsätzen gebildet ist, sind Zapfen $13_5$ vorgesehen, welche bei luftleerem
Reifen eine Abstützung auf den Felgenfortsätzen $12_2$ vornehmen.
Zur Druckregulierung im Reifeninnenraum $13_6$ ist im Felgenfortsatz
$12_2$ eine Bohrung $12_4$ angeordnet. Im Hohlraum des Felgenfortsatzes sitzt ein Filtereinsatz mit Saugventil $12_5$, welches sich
öffnet, sobald die Reifen-Felgen-Verbindung $12_2$, $13_1$ aus dem
Belastungszustand in den Normalzustand übergeht. Dann wird Luft
von aussen in den Raum 15 gesaugt. Beim Umlauf des Rades bewegen sich beide Fortsätze beim Aufsetzen des Reifens an dieser
Stelle wieder aufeinander zu. Dann wird die Luft aus dem Raum 15
über Bohrungen $12_6$ über das Ringventil $12_7$ durch Verdichtung in
den Reifeninnenraum $13_6$ gepumpt. Der Druckreglereinsatz $12_8$ in

der Felge $12_1$ öffnet in dem Augenblick, wo der Reifendruck den durch die eingebaute Feder eingestellten Druck überschreitet. Dann ist der Betriebsdruck im Reifen wieder hergestellt. Beim Umlaufen des Reifens findet also ein ständiger Luftdurchtritt durch den Reifen statt. Selbstverständlich kann diese Radlösung ohne die Druckluftautomatik mit normaler Druckluftversorgung ausgeführt werden und weist dabei die oben angeführten Betriebsvorteile bezüglich Seitenführung, Formbeständigkeit bei Reifenbeschädigung, Gewichts- und Aufwandsreduktion auf.

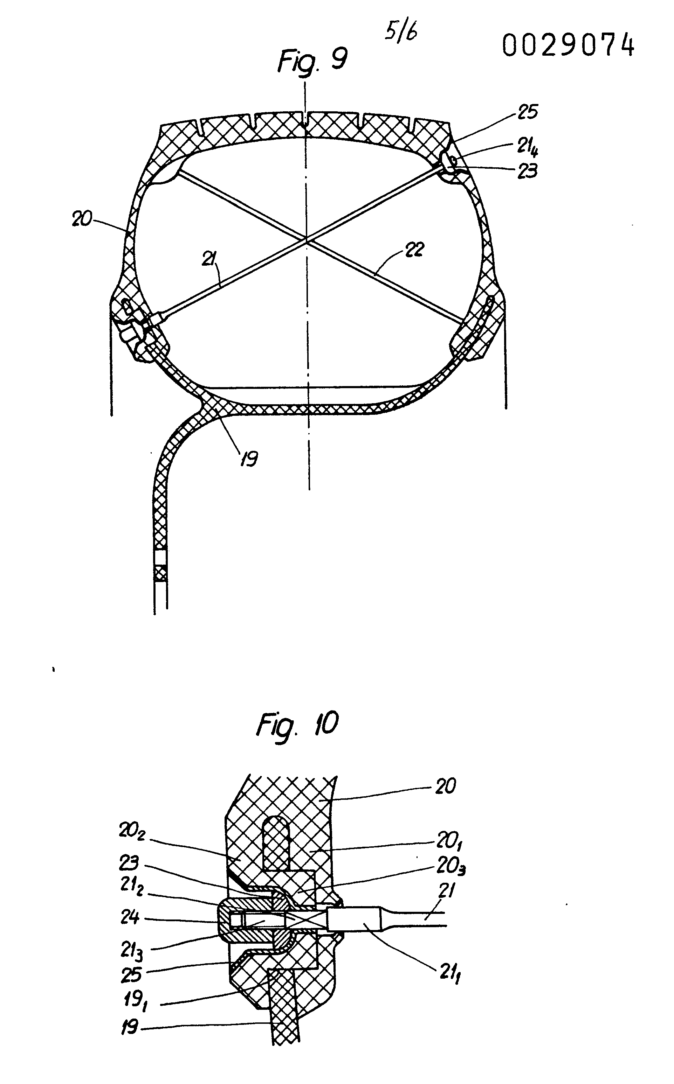

In Fig. 8 ist eine Mittenabstützung in einem Teilschnitt dargestellt, bei der die mit 17 gekennzeichnete Felge rohrförmige Fortsätze $17_1$ besitzt, in welche eine Rohrverlängerung $17_2$ eingesetzt ist, um die Abstützung des Reifens 18 an einem grösseren wirksamen Radius an dessen Rohrfortsätzen $18_1$ vornehmen zu können.

In Fig. 9 ist ein luftbereiftes Kraftfahrzeugrad mit einer im Reifenluftraum angebrachten Kreuzversteifung durch Metall- oder Kunststoffstreben wiedergegeben. Die beispielsweise aus Polyurethan hergestellte Felge 19 ist wie bei den anderen Ausführungen an ihren Hörnern mit dem Reifen 20 verbunden. In Fig. 10 ist eine dieser Verbindungsstellen vergrössert dargestellt. Der fertig gegossene Reifen 20 weist auf jeder Seite geteilte Wülste $20_1$ und $20_2$ auf, welche durch die Oeffnungen $19_1$ im Felgenhorn hindurchgreifend, über die Zapfen $20_3$ in entsprechenden Ausnehmungen des Wulstinnenlappens $20_1$ eine formschlüssige Verbindung zwischen Wulst und Felge herstellen.

Im Zapfen $20_3$ ist eine Aussparung vorgesehen, in welche die Blechkappe 25 eingepresst ist. In dieser stützt sich über die Kugelscheibe 23 die Strebe 21 mit ihrer Mutter 24 ab. Die Stre-

.../

be 21 weist eine zylindrische Anstauchung $21_1$ auf, über welche die Abdichtung vorgenommen wird, einen Vierkant $21_2$, welcher über die Blechkappe 25 eine Verdrehung der Strebe verhindert und den Gewindefortsatz $21_3$, auf dem die Hutmutter 24 sitzt. Die Strebe 21 mündet auf der entgegengesetzten Reifenseite kurz unterhalb des Laufprofils in einer Reifenausnehmung, wo sie sich über ihr Stauchende $21_4$ über die Kugelscheibe 23 in der Blechkappe 25 abstützt. Durch die Ueberkreuzanordnung der Streben 21, 22 usw. wird die erforderliche Seitensteifigkeit des Reifens, ohne dessen Federcharakteristik ungünstig zu beeinflussen, hergestellt.

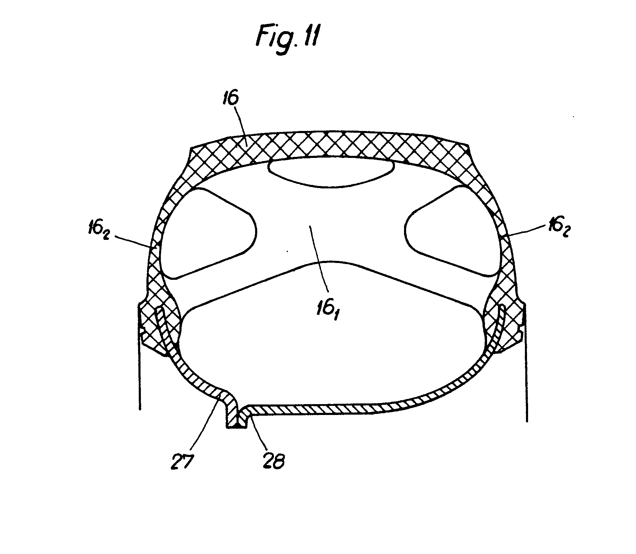

Schliesslich ist in Fig. 11 noch eine Radlösung wiedergegeben, bei der eine, an der Stosstelle geschweisste, aus zwei Leichtmetallhälften 27 und 28 bestehende Felge verwendet wird. Die Schweissnaht zwischen den Felgenhälften wird im eingebauten Zustand nicht auf Zug belastet, weil die Halterung der Felge gemäss Fig. 1 erfolgt.

0029074

Dr.Ing. Hermann Klaue
33, av. du Casino          R 721
CH-1820 Montreux

### Luftbereiftes Kraftfahrzeugrad

Patentansprüche:

1) Luftbereiftes Kraftfahrzeugrad, dadurch gekennzeichnet, dass die Felge (5; $12_1$; 17) mit dem aufgegossenen oder aufgeklebten Reifen (7; 10; 11; 16; 18) aus vorzugsweise faserverstärktem Kunstkautschuk eine Einheit bilden.

2) Luftbereiftes Kraftfahrzeugrad, nach Anspruch 1, dadurch gekennzeichnet, dass die Felge aus faserverstärktem Kunststoff, beispielsweise Polyurethan, Polyamid, Polyester mit 20 bis 50 % Glasfaser hergestellt ist.

3) Luftbereiftes Kraftfahrzeugrad, nach Anspruch 1, dadurch gekennzeichnet, dass an den Aufklebstellen des Reifens (7; 10; 11; 16; 18; 20) eine zusätzliche formschlüssige Verbindung ($10_1$ bis $10_4$; $11_1$ bis $11_4$) zwischen Felgenhorn ($5_2$) und Reifen (7; 10; 11; 16; 18; 20) dergestalt hergestellt ist, dass vorgeformte Fortsätze ($10_3$, $10_4$; $11_4$) das Felgenhorn ($5_2$) durchdringen.

4) Luftbereiftes Kraftfahrzeugrad, nach Anspruch 1 bis 3, dadurch gekennzeichnet, dass der auf die Felgenhörner aufgeklebte Reifen (16) eine um Umfang verteilt, quer oder schräg zur Umfangsrichtung angeordnete Rippenverstärkung ($16_1$) aus Kautschuk aufweist, welche an den Stellen der Reifenseitenwände ($16_2$) derart ausgenommen ist, dass eine freie Ausbuchtung der Seitenwände möglich bleibt.

5) Luftbereiftes Kraftfahrzeugrad, nach Anspruch 1 bis 4, dadurch gekennzeichnet, dass die Querverstärkung durch Metall- oder Kunstfaserstreben (21, 22) hergestellt wird.

6) Luftbereiftes Kraftfahrzeugrad, nach Anspruch 1, dadurch gekennzeichnet, dass die vom Reifen (7; 10; 11; 16; 18; 20) durch Giessen oder Kleben umfassten Felgenhörner $(5_2)$ so lang ausgeführt sind, dass von ihnen ein Drittel bis die Hälfte der Querschnittshöhe von Felge und Reifen zusammen gebildet wird.

7) Luftbereiftes Kraftfahrzeugrad, nach Anspruch 1, 2 und 4, dadurch gekennzeichnet, dass sowohl die Felge $(12_1, 17)$, als auch der Reifen (13; 18) im Reifenluftraum $(13_6)$ ineinandergreifende Rippen- oder Profilfortsätze $(12_2, 13_1; 17_1, 17_2, 18_1)$ aufweisen.

8) Luftbereiftes Kraftfahrzeugrad, nach Anspruch 1 und 4, dadurch gekennzeichnet, dass die Fortsätze $(12_2, 17_1)$ der Felge $(12_1, 17)$ und die Fortsätze $(13_1, 18_1)$ des Reifens (13; 18) rohrförmig ausgebildet sind.

9) Luftbereiftes Kraftfahrzeugrad, nach Anspruch 1, 4 und 5, dadurch gekennzeichnet, dass in den rohrförmigen Fortsätzen $(13_1)$ des Reifens (13), welche die Felgenfortsätze $(12_2)$ umfassen, bei drucklosem Reifen zur Anlage kommende Anschläge $(13_5)$ vorgesehen sind.

10) Luftbereiftes Kraftfahrzeugrad, nach Anspruch 1 und 4 bis 6, dadurch gekennzeichnet, dass die sich zwischen den Reifen- und Felgenfortsätzen bildenden Druckräume (15) dergestalt zum Erzeugen und Regulieren des Reifeninnendruckes benutzt werden, dass in den Felgenfortsätzen $(12_2)$ Bohrungen $(12_4)$

R 721

sowie federbelastete Saugventile ($12_5$) und Druckventile ($12_7$) mit einer Verbindung zum Reifeninnenraum ($13_6$) und in der Felgenwand ein Druckregelventil ($12_8$) mit einem Auslass nach aussen vorgesehen sind, welche beim Umlauf des Rades bewirken, dass eine gewisse Luftmenge in die Druckräume (15) gesaugt, durch Verdichtung in den Reifen-luftraum ($13_6$) gedrückt und dort reguliert wird.

Fig. 1

0029074

Fig. 2

Fig. 3

Fig. 4

0029074

Fig. 5

Fig. 8

Fig. 6  4/6      0029074

Fig. 7 (A-B)

0029074

Fig. 9

25
21₄
23
20
21
22
19

Fig. 10

20
20₂
20₁
23
20₃
21₂
24
21
21₃
25
19₁
21₁
19

*Fig. 11*

| Kategorie | Kennzeichnung des Dokuments mit Angabe, soweit erforderlich, der maßgeblichen Teile | betrifft Anspruch |
|---|---|---|
| | FR - A - 2 244 619 (GOODYEAR TYRE) <br> * Seite 13, Zeile 27 bis Seite 14, Zeile 35 * <br><br> -- | 1,2,5 |
| | US - A - 4 033 395 (W. BERG) <br> * Spalte 1, Zeilen 17-25; Spalte 3, Zeilen 23-54 * <br><br> -- | 3 |
| A | US - A - 3 698 463 (N. BANKS) | |
| A | US - A - 3 807 474 (D. WENDT) | |
| A | US - A - 3 010 504 (V. POLHEMUS) | |
| A | DE - A - 2 055 172 (B.F. GOODRICH) | |
| A | US - A - 1 339 516 (B. KARR) | |
| A | DE - C - 464 619 (H. KEITEL) | |
| A | US - A - 2 095 489 (G. COTTON) | |
| A | US - A - 2 021 646 (H. CRANDALL) | |
| | ---- | |

**EINSCHLÄGIGE DOKUMENTE**

**KLASSIFIKATION DER ANMELDUNG (Int. Cl.³)**

B 60 C 15/02
B 60 B 21/10
B 60 C 23/12

**RECHERCHIERTE SACHGEBIETE (Int. Cl.³)**

B 60 C 15/02
B 60 B 21/10
B 60 C 23/12

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-02-1981 | SCHMITT |

EPA form 1503.1   06.78